# EUROPEAN PATENT SPECIFICATION

(11) **EP 2 223 018 B1**
(45) Date of publication and mention of the grant of the patent: **26.03.2014**
(21) Application number: 08848832.5
(22) Date of filing: 14.11.2008
(51) Int. Cl.: F24D 3/08, F24D 3/10, F24H 9/12, F16L 37/00, G05D 23/13, F24H 9/14

(54) **Valve assembly for a combined system**
Ventilsystem für ein kombiniertes System
Ensemble de soupape pour un système combiné

(30) Priority: 16.11.2007 IT BO20070760
(43) Date of publication of application: 01.09.2010
(73) Proprietor: O.T.M.A. S.N.C. di Spaggiari & C., 42041 Brescello (IT)
(72) Inventor: RASTELLI, Raffaello, I-43058 Sorbolo (IT); SPAGGIARI, Remo, I-43058 Sorbolo (IT)
(74) Representative: Bergadano, Mirko
(86) International application number: PCT/IB2008/003075
(87) International publication number: WO 2009/063308

(56) References cited:
- EP-A- 0 806 612
- EP-A- 1 288 581
- EP-A- 1 447 627
- WO-A-2007/010585
- DE-A1- 19 912 569
- DE-A1-102004 012 817
- DE-C1- 19 807 657
- DE-U1- 20 001 539
- GB-A- 2 047 858
- US-A- 5 224 466
- US-A- 6 035 887
- US-A1- 2004 144 436
- US-A1- 2007 095 412
- US-B1- 6 213 149

## Description

### TECHNICAL FIELD

The present invention relates to a valve assembly for a combined system for the production of hot water, wherein the combined system comprises solar panels and a wall-mounted gas boiler.

### BACKGROUND ART

The new laws in the matter of energy saving oblige in some cases, and promote in general, the installation of domestic heating systems which use solar energy for producing hot water, in combination with combined boilers for heating environments and producing hot water for domestic purposes.

This type of system includes the use of devices for automatically selecting the domestic hot water production mode with priorities conferred to the solar panels and possible integration of the heat produced by the gas boiler if the production of energy from solar source is not sufficient.

The gas boiler is activated by a temperature sensor which, in combination with a three-way valve, diverts the domestic hot water to the boiler when the temperature of the solar accumulator is below 45°/50°C.

Furthermore, a thermostat mixing value checks the water temperature sent to the user to prevent the occurrence of undesired overheating.

In the known apparatuses, all these devices are individually installed on the pipes close to the gas boiler either directly in sight or enclosed in a box separate from the rest of the gas boiler.

Both solutions imply a considerable increase in the dimensions of the entire heating apparatus with negative consequences on installation thereof. Furthermore, the solutions adopted until today have considerably negative implications from the point of view of appearance. Indeed, a wall-mounted gas boiler provided either with tangle of pipes outside its overall dimensions or with a box under the boiler itself is unsightly.

### DISCLOSURE OF INVENTION

It is thus the main object of the present invention to provide a valve assembly for a combined system for the production of hot water which is as compact as possible and which solves the problems of the similar valve assemblies present in the prior art.

### BRIEF DESCRIPTION OF THE DRAWINGS

The present invention will now be described with reference to the accompanying drawings, which illustrate some non-limitative embodiments thereof, in which:
- figure 1 shows an approximate diagram of an autonomous combined system for the production of hot water;
- figure 2 diagrammatically shows an enlargement of a valve assembly according to the present invention which is used in the system in figure 1;
- figure 3 shows a three-dimensional overall view individually installed on the pipes close to the gas boiler either directly in sight or enclosed in a box separate from the rest of the gas boiler.

Both solutions imply a considerable increase in the dimensions of the entire heating apparatus with negative consequences on installation thereof. Furthermore, the solutions adopted until today have considerably negative implications from the point of view of appearance. Indeed, a wall-mounted gas boiler provided either with tangle of pipes outside its overall dimensions or with a box under the boiler itself is unsightly.

EP-A-0 808 612 (COMPEX BAUBERATUNGS UND AUSFUE) discloses a combined system for the production of hot water; the system comprising:
- a first apparatus for producing hot water by means of at least one solar panel;
- a second apparatus adapted to burn a fuel;
- a hydraulic network hydraulically connecting the first apparatus to the second apparatus and to the other users; and
- a mixer/diverter valve assembly adapted to adjust the water flows from/to the first apparatus, from/to the second apparatus and to at least one domestic water user. So in EP-A-0 808 612 it is disclosed the preamble portion of present Claim 1. Moreover, in EP-A-0 808 612 it is also disclosed a valve assembly for combined systems for the production of hot water.

In the following documents:
- EP-A-1 288 581 (VIESSMANN WERKE KG)
- DE 199 12 569 (AUGUST BROETJE GMBH)
- GB-A- 2 047 858 (BRAEMER APPLIANCES PTY LTD)
- EP-A-1 447 627 (IMMOSOLAR DEUTSCHLAND GMBH et al.)
- WO 2007/010585 A (OTMA)
are also described some valve assemblies for combined systems for the production of hot water. However, no one of such documents provides any compact valve assembly for combined systems that is easily mountable/dismountable. Moreover, in document DE 10 2004 012817 A1 (WOLF GMBH) a well-known bayonet coupling between two pipes is described. In any case, also DE 10 2004 012817 doesn't provide any valve assembly for combined systems that is easily mountable/dismountable.

Furthermore, in the document US-A1-6 035 887 (Cato) it is described a valve assembly for use with the permanent watering systems for yards, gardens, etc. Thus, the valve assembly described in US-A1-6 035 887 (Cato) is NOT suitable for combined systems for the production of hot water *as per* the present invention.

In fact, in US-A1-5 035 887 (Cato) neither a "diverter body", nor a "mixing body" have been described because the valve assembly object of such a piece of prior is aimed to permanent watering systems wherein hot water is not used.

### DISCLOSURE OF INVENTION

It is thus the main object of the present invention to provide a combined water heating apparatus which is as compact as possible and which solves the problems of the similar apparatuses present in the prior art.

### BRIEF DESCRIPTION OF THE DRAWINGS

The present invention will now be described with reference to the accompanying drawings, which illustrate some non-limitative embodiments thereof, in which:

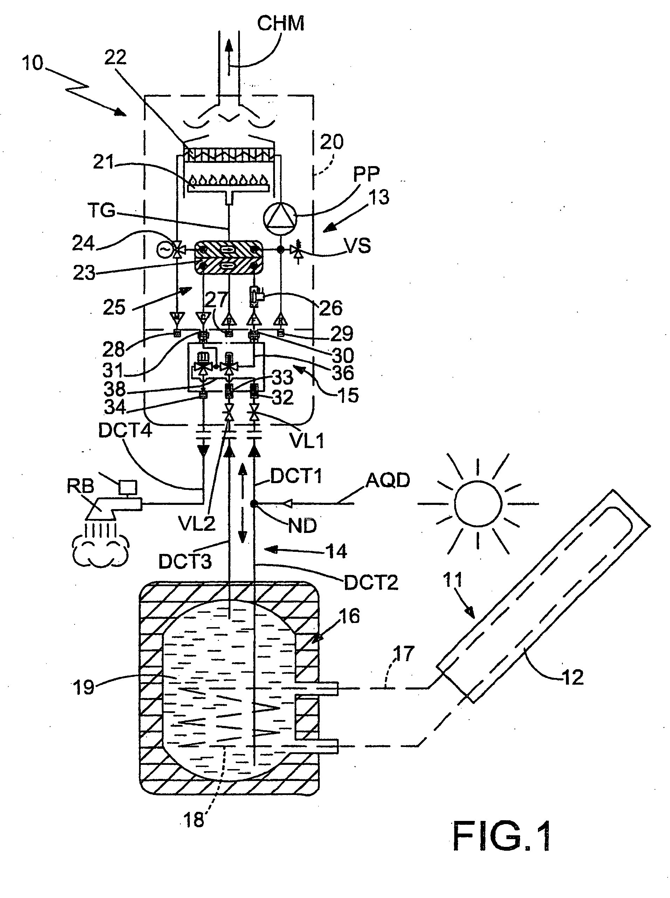

- figure 1 shows an approximate diagram of an autonomous combined system for the production of hot water;

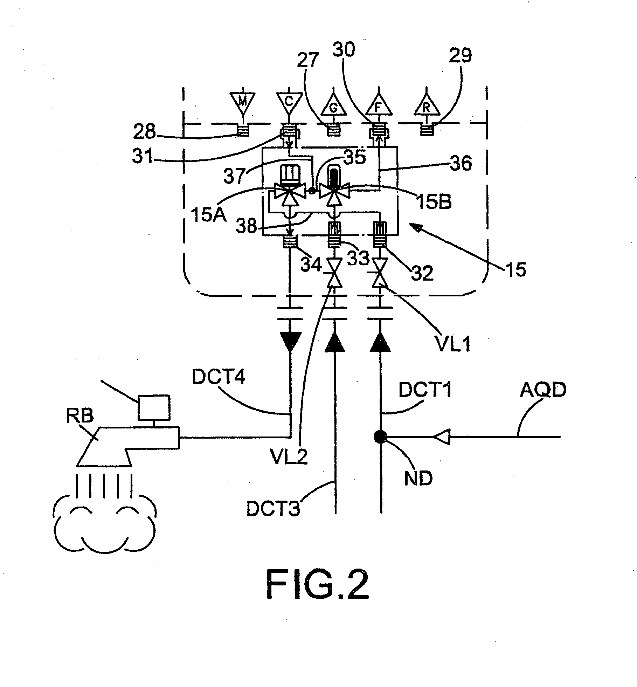

- figure 2 diagrammatically shows an enlargement of a valve assembly used in the system in figure 1;

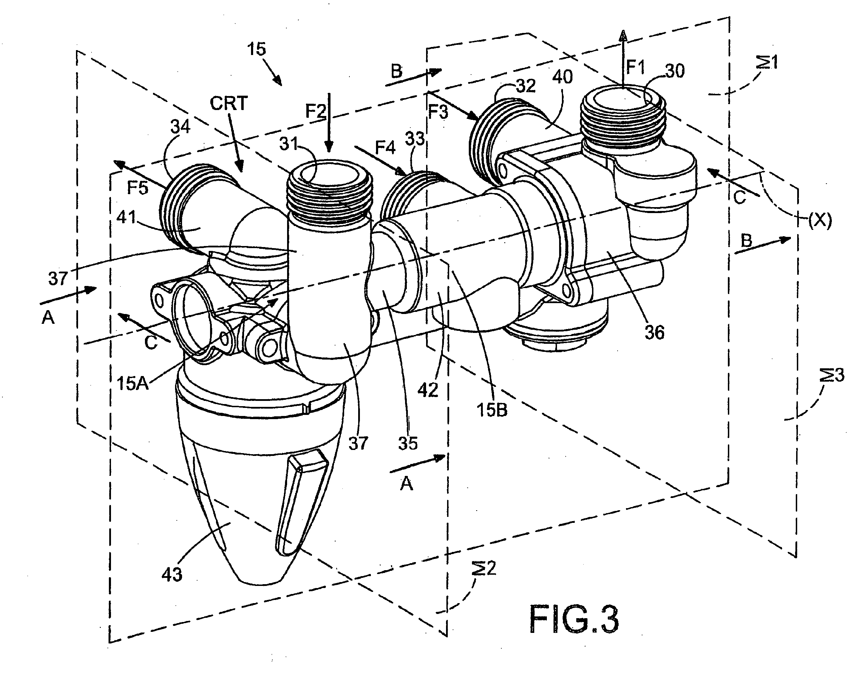

- figure 3 shows a three-dimensional overall view of a first embodiment of the valve assembly in figure 2;

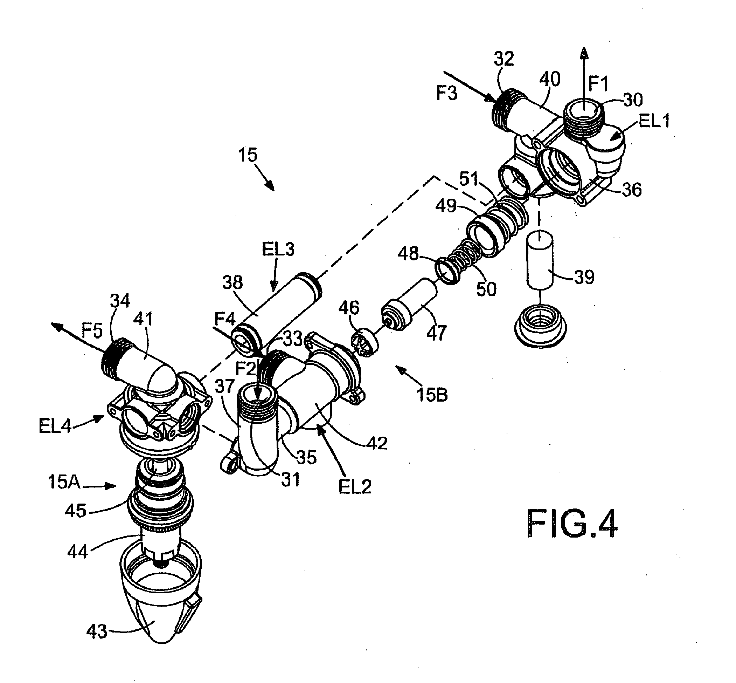

- figure 4 shows an exploded view of the first embodiment of the valve assembly in figure 3;

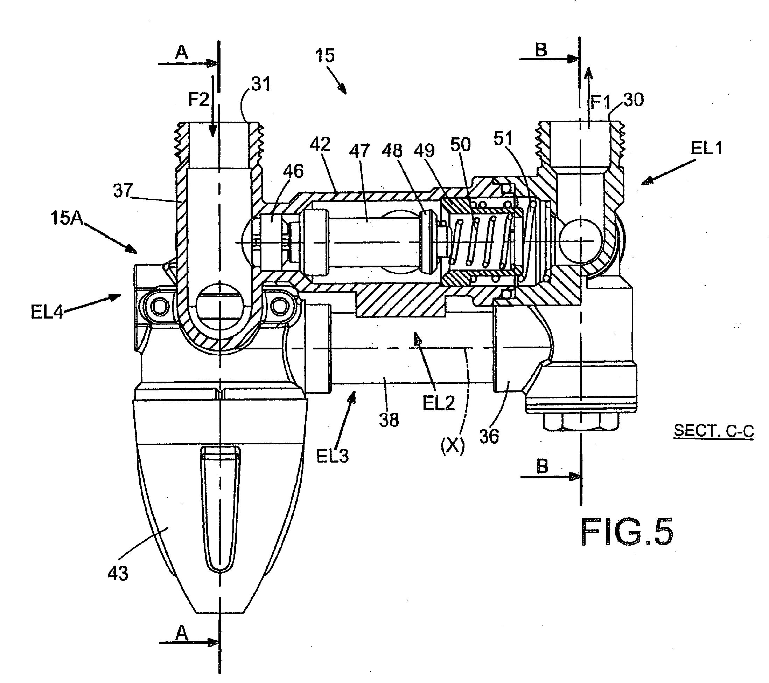

- figure 5 shows a section C-C taken along a plane ∑1 of the overall view in figure 3;

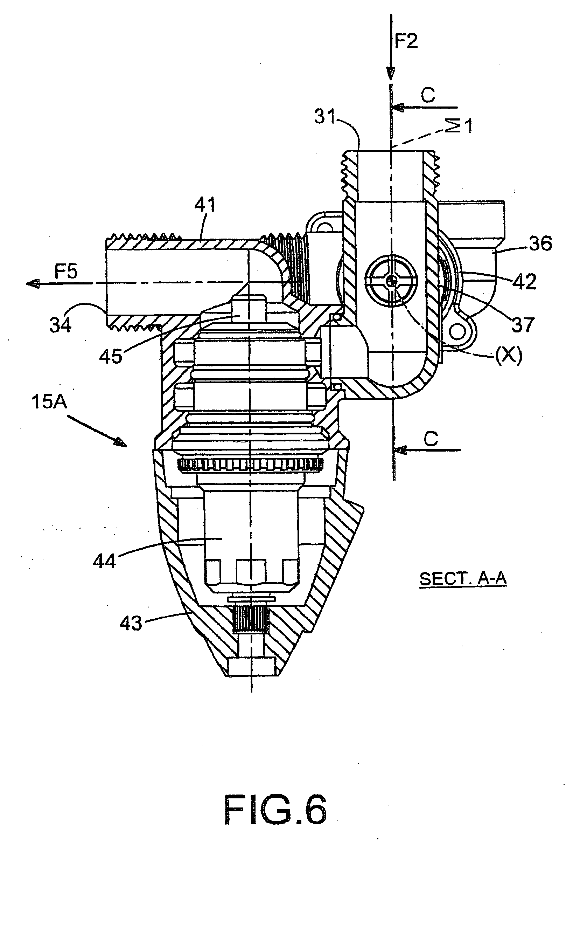

- figure 6 shows a section A-A taken on a plane ∑2 of the details in figure 5;

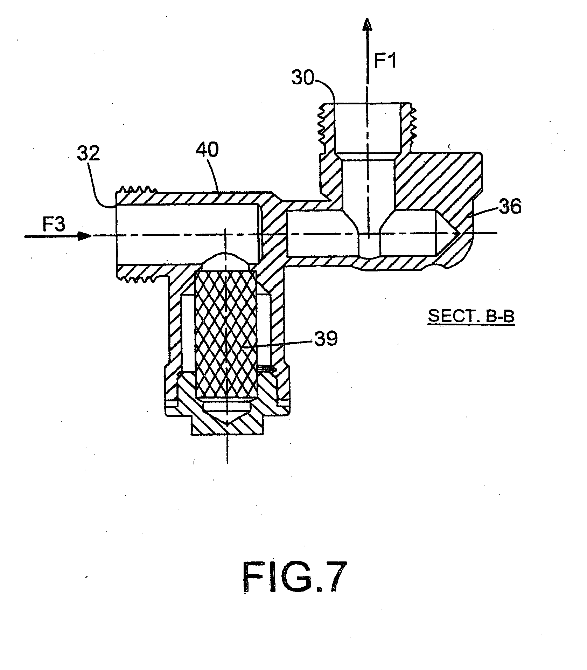

- figure 7 shows a section B-B taken on a plane ∑3 of the details in figure 5;

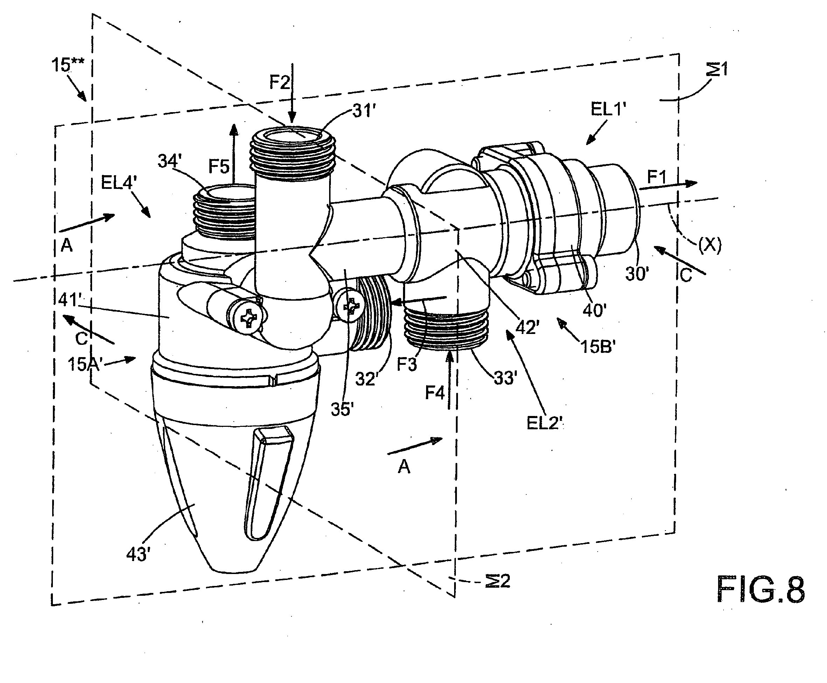

- figure 8 shows a three-dimensional overall view of a second embodiment of the valve assembly in figure 2;

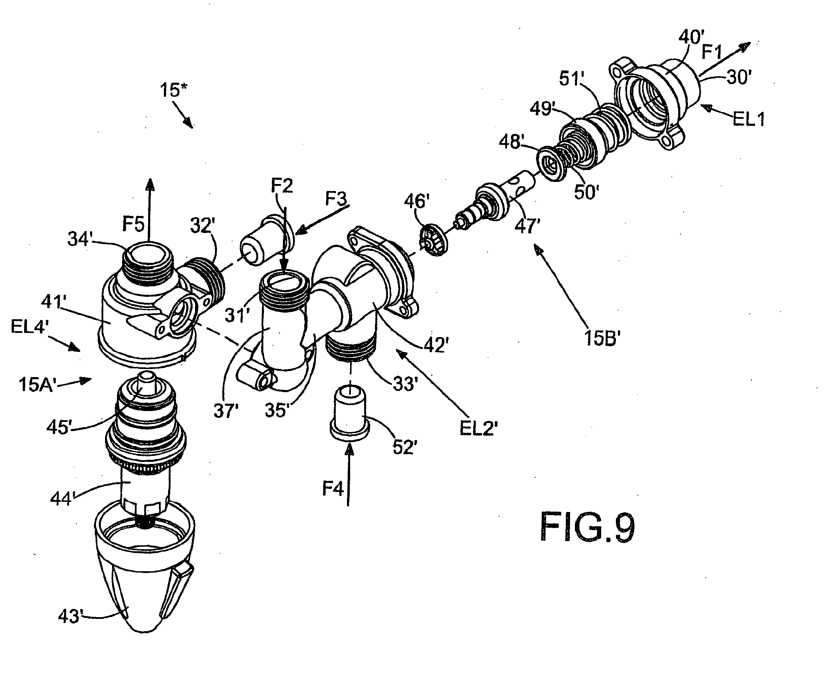

- figure 9 shows an exploded view of a second embodiment of the valve assembly in figure 8;

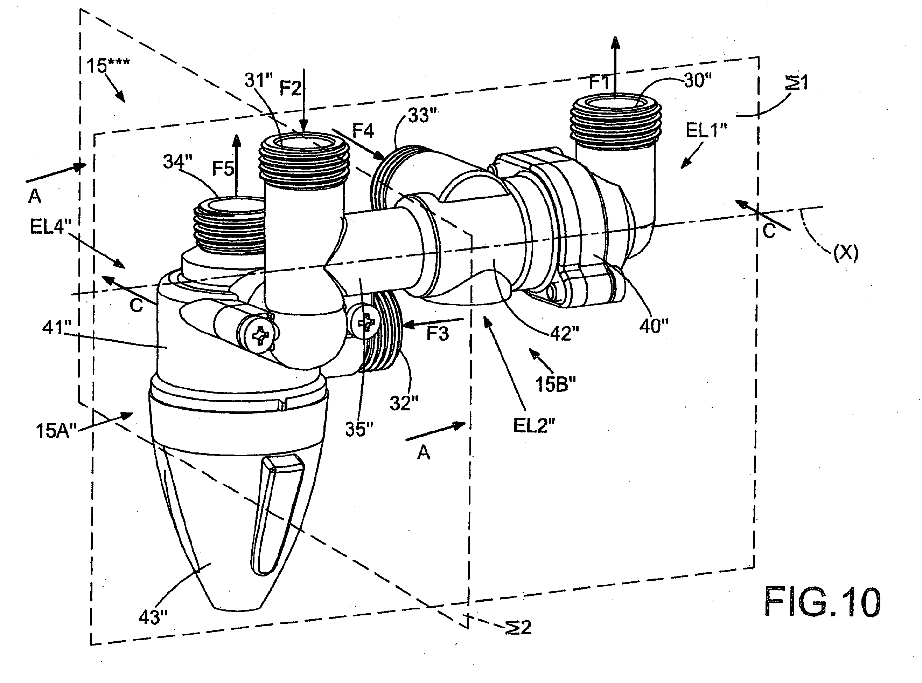

- figure 10 shows a three-dimensional overall view of a third embodiment of the valve assembly in figure 2;

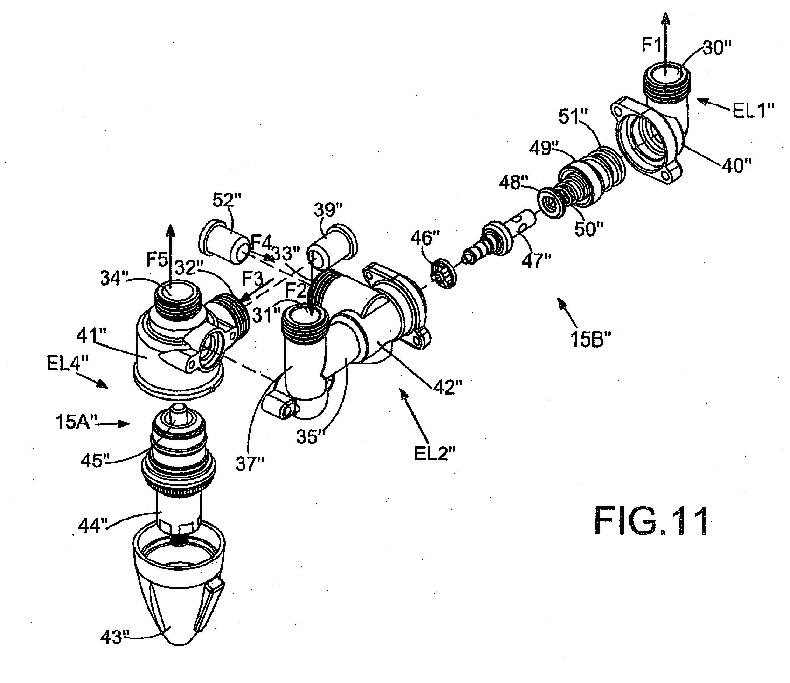

- figure 11 shows an exploded view of the third embodiment of the valve assembly in figure 10.

### BEST MODE FOR CARRYING OUT THE INVENTION

In figure 1, numeral 10 indicates as a whole an autonomous combined system for the production of hot water.

The system 10 comprises, in a known manner, a first apparatus 11 for the production of hot water with at least one solar panel 12.

The system 10 further comprises a second apparatus 13, in this case a wall-mounted boiler, a hydraulic network 14 hydraulically connecting the first apparatus 11 to the second apparatus 13 and to the users, and a mixer/diverter valve assembly 15 which is used to adjust the water flows to/from the first apparatus 11 and to/from the second apparatus 13. The system 10 is completed by at least one water dispensing tap RB and at least one environment heating element (not shown in figure 1).

Furthermore, as known, the first apparatus 11 comprises a thermal energy accumulator 16 and a hydraulic circuit 17 provided with a serpentine 18 immersed in the water 19 contained in the accumulator 16 itself.

The cold water from the water mains AQD is diverted, at a diversion node ND, partially to the accumulator 16 through a pipe DCT2, and partially towards a second apparatus 13 through a pipe DCT1 provided with a manual opening/closing valve VL1 for the purposes which will be better specified below.

For completeness, we will briefly describe the circuit elements included in the second apparatus 13.

As shown again in figure 1, the second apparatus 13 (which, in this case, as previously mentioned, is a wall-mounted gas boiler) comprises a casing 20 in which an atmospheric gas burner 21, a first heat exchanger 22, a second heat exchanger 23, a safety valve VS, a pump PP, a three-way valve 24, a hydraulic circuit 25 provided with a flow switch 26 and a chimney CHM for disposing of combustion products are accommodated.

Furthermore, there is a gas feeding tube TG which connects the atmospheric gas burner 21 to a gas distribution system (not shown).

As can be inferred by observing figure 1, while the water circulating in the first heat exchanger 22 is directly heated by the heat produced by the atmospheric gas burner 21, in the second heat exchanger 23 there is a heat exchange between the hot water from the first heat exchanger 22 and the tepid water fed by means of the hydraulic circuit 25 (see below).

Furthermore, the second apparatus 13 comprises a gas inlet 27 in the feeding tube TG, a hot water delivery outlet 28 for feeding a heating system (not shown), a return inlet 29 for the tepid water from the heating system itself, an inlet 30 for the cold water from the water mains AQD (or better, from the mixer/diverter valve assembly 15) and a hot water outlet 31 towards the user dispensing tap RB (or better, towards the mixer/diverter valve 15).

The hot water produced in the accumulator 16 flows towards the mixer/diverter valve assembly 15 by means of a pipe DCT3 provided with a manual opening/closing valve VL2.

In essence, the mixer/diverter valve assembly 15 communicates with the outside by means of an inlet 32 for the cold water from the pipe DCT1, by means of an inlet 33 for the hot water from the accumulator 16 through the pipe DCT3, and by means of an outlet 34 of a pipe DCT4 which hydraulically connects the mixer/diverter valve assembly 15 itself to the user dispensing tap RB.

As shown in figure 2, the valve assembly 15 contains therein a mixer 15A and a diverter valve 15B connected together by appropriate pipe fittings (see below).

Furthermore, as we will see in greater detail below, in virtue of its compactness, the valve assembly 15 is substantially entirely included in the casing 20, thus improving dimensions and aesthetic features of the system 10.

### Briefly, the system 10 works as follows.

[A] The water used for heating the radiators is heated in the first heat exchanger 22 by the flames and fumes produced by the atmospheric gas burner 21; such a hot water exits from the delivery outlet 28 and returns, at lower temperature, through the return inlet 29 after the heating system (not shown) has been crossed; furthermore, it is worth noting that the water used in the environment heating system (not shown) does not cross the valve assembly 15.
[B] Instead, with regards to the water for domestic use, if for example the temperature of the water which exits from the thermal energy accumulator 16 is hotter than 45°C (thus at a temperature broadly sufficient to meet the most common domestic uses) the diverter valve 15B diverts the water towards the mixer 15A by means of a pipe 35 (a circular section, tubular pipe); as shown in figures 1, 2, the cold water pipe DCT1 also ends in the mixer 15A; therefore, the water from the accumulator 16, and thus of solar production, is possibly mixed in the mixer 15A with the cold water from the water mains AQD which flows through the pipe DCT1 and enters the valve assembly 15 through the inlet 32; this all to obtain an output of water towards the dispensing tap RB water having a temperature pre-set in the mixer 15A, through an adjusting knob 43 (figure 3).
[C] If, instead, the temperature of the water which exits from the thermal energy accumulator 16 is cooler than 45°C (and thus at a temperature insufficient to meet the most common domestic uses), the diverter valve 15B diverts the water to the second heat exchanger 23 through a pipe 36; the water, further heated in the second heat exchanger, is routed towards the mixer 15A using a pipe 37; also in this case, the possible mixing with the cold water from the water mains AQD, which flows through the pipe DCT1 and enters in the valve assembly 15 through the inlet 32, occurs in the mixer 15A; all this to obtain an output of mixed water to the dispensing tap RB, having a temperature pre-set by means of the knob 43 (figure 3).

Figures 3, 4, 5, 6, 7 show a first embodiment of an extremely compact valve assembly 15*.

Firstly, it is worth emphasizing that the valve assembly 15* comprises the circuit elements which have previously been described with reference to figures 1 e 2. Furthermore, an inlet joining pipe 38 (a circular section, tubular pipe) for the cold water coming directly from the inlet 32, a cold water filter 39 accommodated in a filter/cold inlet/boiler inlet body 40, a mixing body 41 and a diverter body 42 (a circular section, tubular body) are included.

The set of pipes 35, 36, 37, joining tube 38, filter/cold inlet/boiler inlet body 40, mixing body 41 and the diverter body 42 forms a very compact, single block casing, shown in particular in figure 3.

Therefore, one aspect of the present combined system consists in that, in virtue of its extreme compactness, the single block casing CRT may be completely accommodated in the casing 20 of the second apparatus 13.

More in detail, and with reference to figure 4, it may be noted that the mixer 15A comprises, in a known manner, the adjusting knob 43 by means of which the mixed water temperature is set at the outlet of the valve assembly 15* towards the dispensing tap RB.

The mixer 15A further comprises a thermostat cartridge 44 and a thermostat actuator 45, both accommodated in the aforesaid mixer body 41.

In turn, the diverter valve 15B comprises, in a known manner, a support 46 of a thermostat actuator 47, a shutter 48 and a movable seat 49.

The movable seat 49 contains therein a diverter spring 50 and is boxed in an extra-stroke spring 51.

As shown in figure 4, the support 46, the thermostat actuator 47, the shutter 48, the movable seat 49, the diverter spring 50 and the extra-stroke spring 51 are contained, in use, in the pipe 35, in the diverter body 42, and in the pipe 36 included in the body 40.

The operation of the single circuit elements included in the valve assembly 15* will not be explained here because widely known in the domain of construction of hydraulic assemblies for wall-mounted gas boilers.

Finally, observing the figures 3, 4 we can say that the casing CRT (which contains all the functional means, except for the adjusting knob 43) of the valve assembly 15* comprises the following circuit elements made of metal or plastic:
- a first circuit element EL1 comprising, in turn, the inlet 30, the inlet 32, the pipe 36, and the body 40;
- a second circuit element EL2 comprising, in turn, the inlet 31, the inlet 33, the pipe 35, the pipe 37 and the diverter body 42;
- a third circuit element EL3 comprising the joining tube 38; and
- a fourth circuit element EL4 comprising the outlet 34 and the mixer body 41.

Furthermore, as shown in particular in figures 3, 4, the mixer 15A is contained in the fourth circuit element EL4 from which the adjusting knob 43 protrudes. The diverter valve 15B is contained, in turn, in the second circuit element EL2 and in the first circuit element EL1.

The four circuit elements EL1, EL2, EL3, EL4 may be easily and reciprocally assembled/disassembled and are snap-connected to one another. Furthermore, the circuit elements EL1, EL2, EL3, EL4 are reciprocally fastened by means of simple screws (not shown).

Figures 8, 9 show a second embodiment of the valve assembly 15**.

For ease of interpretation of the drawings, almost the same reference numbers have been used for describing the first embodiment in figures 3-7 (adding an apex).

The greatest difference between the two embodiments consists in the different position of the joints for adapting the valve assembly 15** to a different type of boiler. Furthermore, it is worth noting that in the second embodiment, the joining tube 38 has been removed, which alone formed the third circuit element EL3, and a further filter 52' at the inlet 33' of the water from the accumulator 16 has been added.

Figures 10, 11 show a third embodiment of the valve assembly 15***.

For the ease of interpretation of the drawings, almost the same reference numbers have been used for describing the first embodiment in figures 3-7 and the second embodiment shown in figures 8, 9 (adding an apex).

The third embodiment shown in figures 10, 11 differs from the second embodiment in figures 8, 9 for some details.

Indeed, in the third embodiment, the inlet 33" of the water from the accumulator 16 is placed in a different manner as compared to the second embodiment. Furthermore, as can be easily inferred by comparing the figures 9 and 11, the position of the inlet 30" in the boiler has also been changed.

It is worth noting that in each of the three embodiments of the present invention, the distance between the hydraulic joints is predetermined so as to meet the needs of all types of wall-mounted gas boilers currently marketed.

Summarizing, we can say that each of the three embodiments shown in figures 3, 8, 10 respectively includes:
- a water flow F1 (towards the boiler 13) which crosses the inlet 30; 30'; 30";
- a water flow F2 (from the boiler 13) which crosses the inlet 31; 31'; 31";
- a water flow F3 (from the water mains AQD) which crosses the inlet 32; 32'; 32";
- a water flow F4 (from the accumulator 16) which crosses the inlet 33; 33'; 33"; and
- a water flow F5 (towards the dispensing tap RB) which crosses the outlet 34; 34'; 34".

Let us now consider a longitudinal symmetry axis (X) of the diverter body 42 and a plane ∑1 on which the water flows F1, F2 and the axis (X) lay (in all three cases).

In the first embodiment in figure 3, the water flows F1, F2 are parallel to each other, while the water flows F3, F4, F5 are all perpendicular to the plane ∑1. The water flows F2, F5 lay on a plane ∑2 perpendicular to the plane ∑1; while the water flows F1, F3 lay on a plane ∑3 perpendicular to the plane ∑1 and parallel to the plane ∑2.

In the second embodiment, shown in figure 8, the water flows F1, F2, while laying on the plane ∑1, are perpendicular to each other; the water flow F3 is parallel to the plane ∑1; the water flow F4 lays on the plane ∑2; the water flows F2, F5 lay on the plane ∑2.

In the third embodiment in figure 10, the water flows F1, F2 are parallel to each other; the water flow F3 is parallel to the plane ∑1 but does not lay thereon; the water flows F2, F5 lay on the plane ∑2.

As can be inferred by observing the exploded views in figures 4, 9, 11, the three embodiments have many elements in common. Indeed, for example, the three embodiments all use the same circuit elements EL2, EL4, the same mixer 15A; 15A'; 15A", the same diverter valve 15B; 15B'; 15B", the same adjusting knob 43; 43'; 43" and the same filter 39; 39'; 39".

For these reasons, by using the teachings of the present invention, a drastic reduction of the elements which must be kept on stock is obtained because, as previously shown, many of the elements forming the mixer/diverter valve assembly 15; 15*; 15**; 15*** are the same for all three embodiments shown in the accompanying figures.

The advantages of the system and of the corresponding valve assembly are the following:
- a considerable reduction of the dimensions of the whole heating apparatus with positive consequences in terms of costs with regards to the installation thereof;
- a drastic reduction of the elements which must be present on stock; and
- a considerable improvement of the overall appearance of the system.

## Claims

1. A valve assembly (15; 15*; 15**; 15***) for combined systems for the production of hot water; wherein the valve assembly (15; 15*; 15**; 15***)
is compact and comprises circuit elements (EL1, EL2, EL3, EL4; EL1', EL2', EL4'; EL1", EL2", EL4") reciprocally interconnected so as to form a single block;
wherein
it comprises a casing (CRT), containing most of the functional means, which comprises four circuit elements (EL1; EL1'; EL1"; EL2; EL2'; EL2"; EL3; EL4; EL4'; EL4") which may be easily reciprocally assembled/disassembled and which are snap-connected to one another so as to form a single block in use;
valve assembly **characterized in that** it comprises:
- a first circuit element (EL1; EL1'; EL1") comprising, in turn, an inlet (30; 30'; 30"), a further inlet (32; 32'; 32"), a pipe (36; 36'; 36"), and a body (40; 40'; 40");
- a second circuit element (EL2; EL2'; EL2") comprising, in turn, an inlet (31; 31'; 31"), a further inlet (33; 33'; 33"), a pipe (35; 35'; 36"), a further pipe (37; 37'; 36") and a diverter body (42; 42'; 42");
- a third circuit element (EL3) comprising a joining tube (38); and
- a fourth circuit element (EL4; EL4'; EL4") comprising an outlet (34; 34'; 34") and a mixing body (41; 41'; 41").

2. A valve assembly (15; 15*; 15**; 15***) as claimed in Claim 1, **characterized in that** it further comprises an adjusting knob (43; 43'; 43") by means of which the domestic water temperature outputted from said valve assembly (15; 15*; 15**; 15***) itself is manually adjusted.

3. A valve assembly (15; 15*; 15**; 15***) as claimed in Claim 1, **characterized in that** a mixer (15A; 15A'; 15A") is contained in the fourth circuit element (EL4; EL4'; EL4") from which an adjusting knob (43; 43'; 43") protrudes; while a diverter valve (15B; 15B', 15B") is contained, in turn, in the second circuit element (EL2, EL2'; EL2") and in the first circuit element (EL1; EL1'; EL1").

4. A valve assembly (15; 15*; 15**; 15***) as claimed in Claim 1, or in Claim 2, **characterized in that** it comprises a first filter (39; 39'; 39") at the cold water inlet (32; 32'; 32").

5. A valve assembly (15; 15*; 15**; 15***) as claimed in anyone of the preceding Claims, **characterized in that** it comprises a second filter (39; 39'; 39") at the inlet (33; 33'; 33") for the water from a solar accumulator (16).

6. A valve assembly (15; 15*; 15**; 15***) as claimed in Claim 1, **characterized in that** it comprises:
- a water flow (F1) which crosses the inlet (30; 30'; 30");
- a water flow (F2) which crosses the inlet (31; 31'; 31");
- a water flow (F3) which crosses the inlet (32; 32'; 32");
- a water flow (F4) which crosses the inlet (33; 33'; 33"); and
- a water flow (F5) which crosses the outlet (34; 34'; 34").

7. A valve assembly (15; 15*; 15**; 15***) as claimed in Claim 6, **characterized in that** the diverter body (42; 42'; 42") has a longitudinal symmetry axis (X) and a plane (∑1) on which the water flows (F1, F2) and the axis (X) lay.

8. A valve assembly (15; 15*; 15**; 15***) as claimed in Claim 7, **characterized in that** the water flows (F1, F2) are parallel to each other, and the water flows (F3, F4, F5) are all perpendicular to the plane (∑1).

9. A valve assembly (15; 15*; 15**; 15***) as claimed in Claim 7, **characterized in that** the water flows (F1, F2), while again laying on the plane (∑1), are perpendicular to each other; the water flow (F3) is parallel to the plane (∑1); the water flow (F4) lays on the plane (∑1); and the water flow (F5) is parallel to the plane (∑1) but it does not lay on it.

10. A valve assembly (15; 15*; 15**; 15***) as claimed in Claim 7, **characterized in that** the water flows (F1, F2) are perpendicular to each other; the water flow (F3) is parallel to the plane (∑1) but it does not lay thereon; the water flow (F4) is normal to the plane (∑1); and the water flow (F5) is parallel to the plane (∑1) while not laying thereon.

## Patentansprüche

1. Ventilsystem (15; 15*; 15**; 15***) für kombinierte Systeme zur Produktion von heißem Wasser;
wobei
das Ventilsystem (15; 15*; 15**; 15***) kompakt ausgeführt ist und Schaltelemente (EL1, EL2, EL3, EL4; EL1', EL2', EL4'; EL1", EL2", EL4") umfasst, welche miteinander wechselseitig verbunden sind, und so einen einzelnen Block bilden;
wobei
es ein Gehäuse (CRT) umfasst, welches die meisten funktionalen Elemente beinhaltet, welche vier Schaltelemente (EL1; EL1'; EL1"; EL2; EL2'; EL1"; EL3, EL4; EL4'; EL4") umfassen, welche leicht wechselseitig aufgebaut/abgebaut werden können und welche gegenseitig aneinander einrasten, um im Betrieb einen einzelnen Block zu bilden;
wobei das Ventilsystem dadurch charakterisiert ist, dass es umfasst:
- ein erstes Schaltelement (EL1; EL1'; EL1"), welches der Reihe nach einen Zulauf (30; 30'; 30") einen weiteren Zulauf (32; 32'; 32"), eine Leitung (36; 36'; 36") und ein Gehäuse (40; 40'; 40") umfasst;
- ein zweites Schaltelement (EL2; EL2"; EL2"), welches der Reihe nach einen Zulauf (31; 31'; 31"), einen weiteren Zulauf (33; 33'; 33") eine Leitung (35; 35'; 35"), eine weitere Leitung (37; 37'; 37") und einen Umlenkkörper (42; 42'; 42") umfasst;
- ein drittes Schaltelement (EL3), welches eine Verbindungsröhre (38) umfasst; und
- ein viertes Schaltelement (EL4; EL4'; EL4"), welches einen Abfluss (34; 34'; 34") und einen Mischerkörper (41; 41'; 41") umfasst.

2. Ventilsystem (15; 15*; 15**; 15***) wie in Anspruch 1 beansprucht, welches dadurch charakterisiert ist, dass es des Weiteren einen Einstellungsknopf (43; 43'; 43") umfasst, durch den die häusliche Wassertemperatur, welche von besagtem Ventilsystem (15; 15*; 15**; 15***) produziert wird, manuell eingestellt wird.

3. Ventilsystem (15; 15*; 15**; 15***) wie in Anspruch 1 beansprucht, welches dadurch charakterisiert ist, dass der Mischer (15A; 15A'; 15A") in dem vierten Schaltelement (EL4, EL4'; EL4") beinhaltet ist, von dem ein Einstellungsknopf (43; 43'; 43") herausragt; während ein Umschaltventil (15B; 15B'; 15B") abwechselnd in dem zweiten Schaltelement (EL2; EL2'; EL2") und in dem ersten Schaltelement (EL1; EL1'; EL1") beinhaltet ist.

4. Ventilsystem (15; 15*; 15**; 15***) wie in Anspruch 1 oder in Anspruch 2 beansprucht, welches dadurch charakterisiert ist, dass es einen ersten Filter (39; 39'; 39") beim Kaltwassereinlass (32; 32'; 32") umfasst.

5. Ventilsystem (15; 15*; 15**; 15***) wie in einem der vorstehenden Ansprüche beansprucht, welches dadurch charakterisiert ist, dass es einen zweiten Filter (39; 39'; 39") am Zufluss (33; 33'; 33") für das Wasser von einem Solarspeicher (16) umfasst.

6. Ventilsystem (15; 15*; 15**; 15***) wie in Anspruch 1 beansprucht, welches dadurch charakterisiert ist, dass es umfasst:
- einen Wasserfluss (11), welcher den Zulauf durchfließt (30; 30'; 30");
- einen Wasserfluss (F2), welcher den Zulauf durchfließt (31; 31'; 31");
- einen Wasserfluss (F3), welcher den Zulauf durchfließt (32; 32'; 32");
- einen Wasserfluss (F4), welcher den Zulauf durchfließt (33; 33'; 33"); und
- einen Wasserfluss (F5), welcher den Abfluss durchfließt (34; 34'; 34").

7. Ventilsystem (15; 15*; 15**; 15***) wie in Anspruch 6 beansprucht, welches dadurch charakterisiert ist, dass der Umschaltkörper (42; 42'; 42") eine longitudinale Symmetrieachse (X) und eine Ebene (∑1) umfasst, in der das Wasser fließt (F1, F2), und die Achse (X) liegt.

8. Ventilsystem (15; 15*; 15**; 15***) wie in Anspruch 7 beansprucht, welches dadurch charakterisiert ist, dass die Wasserflüsse (F1, F2) parallel zueinander sind und die Wasserflüsse (F3, F4, F5) rechtwinklig zu der Ebene (∑1 sind.

9. Ventilsystem (15; 15*; 15**; 15***) wie in Anspruch 7 beansprucht, welches dadurch charakterisiert ist, dass die Wasserflüsse (F1, F2), während sie wieder in der Ebene (∑1) liegen, zueinander rechtwinklig sind; der Wasserfluss (F3) parallel zu der Ebene (∑1) ist; der Wasserfluss (F4) auf der Ebene (∑1) liegt; und der Wasserfluss (F5) parallel zu der Ebene (∑1) ist, aber nicht auf ihr liegt.

10. Ventilsystem (15; 15*; 15**; 15***) wie in Anspruch 7 beansprucht, welches dadurch charakterisiert ist, dass die Wasserflüsse (F1, F2) rechtwinklig zueinander sind; der Wasserfluss (F3) parallel zu der Ebene (∑1) ist, aber nicht darauf liegt; der Wasserfluss (F4) normal zu der Ebene (∑1) ist; und der Wasserfluss (F5) parallel zu der Ebene (∑1) ist, während er nicht darauf liegt.

## Revendications

1. Ensemble vanne (15 ; 15* ; 15** ; 15***) pour systèmes combinés de production d'eau chaude ; l'ensemble vanne (15 ; 15* ; 15** ; 15***) étant compact et comportant des éléments (EL1, EL2, EL3, EL4 ; EL1', EL2', EL4' ; EL1", EL2", EL4") de circuit réciproquement interconnectés de façon à former un bloc unique ;
**caractérisé**
**en ce qu'**il comporte un carter (CRT), contenant la majorité des moyens fonctionnels, qui comportent quatre éléments (EL1, EL1', EL1" ; EL2, EL2', EL2" ; EL3 ; EL4, EL4', EL4") de circuit susceptibles d'être facilement assemblés / désassemblés les uns des / aux autres et qui sont encliquetés les uns aux autres de façon à former un bloc unique en cours d'utilisation ; l'ensemble vanne étant **caractérisé en ce qu'**il comporte :
- un premier élément de circuit (EL1 ; EL1' : EL1") comportant lui-même une entrée (30 ; 30' ; 30"), une entrée supplémentaire (32 ; 32' ; 32"), un tuyau (36 ; 36' ; 36"), et un corps (40 ; 40' ; 40") ;
- un deuxième élément de circuit (EL2 ; EL2' ; EL2") comportant lui-même une entrée (31 ; 31' ; 31"), une entrée supplémentaire (33 ; 33' ; 33"), un tuyau (35 ; 35' ; 36"), un tuyau supplémentaire (37 ; 37' ; 36") et un corps (42 ; 42' ; 42") de dérivation ;
- un troisième élément de circuit (EL3) comportant un tube (38) de jonction ; et
- un quatrième élément de circuit (EL4 ; EL4' ; EL4") comportant une sortie (34 ; 34' ; 34") et un corps (41 ; 41' ; 41") de mélange.

2. Ensemble vanne (15 ; 15* ; 15** ; 15***) selon la revendication 1, **caractérisé en ce qu'**il comporte en outre un bouton (43 ; 43' ; 43") de réglage au moyen duquel la température de l'eau domestique délivrée à partir dudit ensemble vanne (15 ; 15* ; 15** ; 15***) lui-même est réglée manuellement.

3. Ensemble vanne (15 ; 15* ; 15** ; 15***) selon la revendication 1, **caractérisé en ce qu'**un mélangeur (15A ; 15A' ; 15A") est contenu dans le quatrième élément de circuit (EL4 ; EL4' ; EL4") d'où dépasse un bouton (43 ; 43' ; 43") de réglage ; tandis qu'une vanne (15B ; 15B' ; 15B") de dérivation est elle-même contenue dans le deuxième élément (EL2, EL2' ; EL2") de circuit et dans le premier élément de circuit (EL1 ; EL1' ; EL1").

4. Ensemble vanne (15 ; 15* ; 15** ; 15***) selon la revendication 1 ou la revendication 2, **caractérisé en ce qu'**il comporte un premier filtre (39 ; 39' ; 39") à l'entrée (32 ; 32' ; 32") d'eau froide.

5. Ensemble vanne (15 ; 15* ; 15** ; 15***) selon l'une quelconque des revendications précédentes, **caractérisé en ce qu'**il comporte un deuxième filtre (39 ; 39' ; 39") à l'entrée (33 ; 33' ; 33") destinée à l'eau provenant d'un accumulateur solaire (16).

6. Ensemble vanne (15 ; 15* ; 15** ; 15***) selon la revendication 1, **caractérisé en ce qu'**il comporte :
- un écoulement (F1) d'eau qui traverse l'entrée (30 ; 30' ; 30") ;
- un écoulement (F2) d'eau qui traverse l'entrée (31 ; 31' ; 31") ;
- un écoulement (F3) d'eau qui traverse l'entrée (32 ; 32' ; 32") ;
- un écoulement (F4) d'eau qui traverse l'entrée (33 ; 33' ; 33") ;
- un écoulement (F5) d'eau qui traverse la sortie (34 ; 34' ; 34").

7. Ensemble vanne (15 ; 15* ; 15** ; 15***) selon la revendication 6, **caractérisé en ce que** le corps (42 ; 42' ; 42") de dérivation présente un axe (X) de symétrie longitudinale et un plan (∑1) sur lequel se situent les écoulements (F1, F2) d'eau et l'axe (X).

8. Ensemble vanne (15 ; 15* ; 15** ; 15***) selon la revendication 7, **caractérisé en ce que** les écoulements (F1, F2) d'eau sont parallèles entre eux et **en ce que** les écoulements (F3, F4, F5) d'eau sont tous perpendiculaires au plan (∑1).

9. Ensemble vanne (15 ; 15* ; 15** ; 15***) selon la revendication 7, **caractérisé en ce que** les écoulements (F1, F2) d'eau, bien qu'ils se situent encore sur le plan (∑1), sont perpendiculaires entre eux ; **en ce que** l'écoulement (F3) d'eau est parallèle au plan (∑1) ; **en ce que** l'écoulement (F4) d'eau se situe sur le plan (∑1) ; et **en ce que** l'écoulement (F5) d'eau est parallèle au plan (∑1) mais ne se situe pas sur celui-ci.

10. Ensemble vanne (15 ; 15* ; 15** ; 15***) selon la revendication 7, **caractérisé en ce que** les écoulements (F1, F2) d'eau sont perpendiculaires entre eux ; **en ce que** l'écoulement (F3) d'eau est parallèle au plan (∑1) mais ne se situe pas sur celui-ci ; **en ce que** l'écoulement (F4) d'eau est normal au plan (∑1) ; et **en ce que** l'écoulement (F5) d'eau est parallèle au plan (∑1) tout en ne se situant pas sur celui-ci.
